Europäisches Patentamt

European Patent Office

Office européen des brevets

(19)

(11) Veröffentlichungsnummer: **0 094 629**
**A2**

(12) ## EUROPÄISCHE PATENTANMELDUNG

(21) Anmeldenummer: **83104701.4**

(22) Anmeldetag: **13.05.83**

(51) Int. Cl.$^3$: **G 02 C 7/02**
**G 02 C 13/00**

(30) Priorität: **14.05.82 DE 3218139**

(43) Veröffentlichungstag der Anmeldung:
**23.11.83 Patentblatt 83/47**

(84) Benannte Vertragsstaaten:
**AT CH DE FR GB LI NL SE**

(71) Anmelder: **Firma Carl Zeiss**

**D-7920 Heidenheim (Brenz)(DE)**

(72) Erfinder: **Bammert, Hubert**
**Auchtstrasse 30**
**D-7080 Aalen 1(DE)**

(72) Erfinder: **Lahres, Hans**
**Am Sattel 5**
**D-7080 Aalen-Wasseralfingen(DE)**

(72) Erfinder: **Mosch, Egon**
**Barbarossastrasse 22**
**D-7081 Essingen(DE)**

(54) **Rohform für Brillenlinsen und Mittel zur Auswahl der geeigneten Rohform.**

(57) Bei Brillenlinsen, die in mindestens einem Schnitt eine Mittendicke größer als die Randdicke und in unterschiedlichen Schnitten unterschiedliche dioptrische Wirkungen haben, führen rohrunde Formen zu eingeschliffenen Brillenlinsen, die ein relativ hohes Gewicht haben. Das Gewicht einer solchen Brillenlinse und damit ihre Mitten- und Randdicke wird reduziert, wenn die Rohform eine im wesentlichen ellipsenförmige Randkurve erhält. Zur Reduzierung von Aufwand und Kosten wird der dioptrische Bereich der Brillenlinsen-Serie in eine vorgegebene Anzahl von Bereichen unterteilt und jedem Bereich wird ein bestimmter Randkurventyp zugeordnet. In jedem Bereich gibt es zum Randkurventyp eine Anzahl von zentrisch ähnlichen Randkurven unterschiedlicher Höhe und Breite. Alle Randkurven sind so gewählt, daß die mit ihnen versehenen Roh-Brillenlinsen über ihren ellipsenförmigen Umfangsteil eine Randdicke haben, die um weniger als 1,5 mm schwankt.

Es sind einfach zu handhabende Mittel zur Auswahl der optimalen Rohform vorgesehen.

Fig. 2b

Croydon Printing Company Ltd

Rohform für Brillenlinsen und Mittel zur Auswahl der geeigneten Rohform

Die vorliegende Erfindung betrifft eine Rohform für Brillenlinsen, die in mindestens einem Schnitt eine Mittendicke größer als die Randdicke und in unterschiedlichen Schnitten unterschiedliche dioptrische Wirkungen haben.

Brillenlinsen werden so gefertigt, daß die Rohform, d.h. die noch nicht in die Fassung eingeschliffene Linse eine kreisförmige Randkurve aufweist. Solche Linsen werden als rohrund bezeichnet.

Brillenlinsen mit negativem Scheitelbrechwert weisen üblicherweise eine Mittendicke von ca. 1,5 mm auf, während ihre Randdicke von der dioptrischen Wirkung abhängt.

Brillenlinsen mit positivem Scheitelbrechwert werden üblicherweise mit einer Randdicke von etwa 0,5 mm gefertigt, während ihre Mittendicke von der dioptrischen Wirkung abhängt.

Astigmatische Brillenlinsen besitzen mindestens eine Fläche, die in einem Hauptschnitt minimale, im anderen Hauptschnitt maximale Krümmung hat. Dies führt bei rohrunden Brillenlinsen dazu, daß die Randdicke im Bereich eines Hauptschnittes beispielsweise zu 0,5 mm gewählt werden kann, jedoch im Bereich des anderen Hauptschnittes sehr viel größer ist. Je nach der Größe des Unterschiedes der dioptrischen Wirkungen in den beiden Hauptschnitten sind bei rohrunden Brillenlinsen Schwankungen der Randdicke um mehrere mm entlang des Umfanges möglich.

Brillenfassungen verlangen allgemein eine Form der einzusetzenden Brillenlinsen, die mehr breit wie hoch ist. Beim Einschleifen der rohrunden Brillenlinsen in die Fassung wird also oben und unten (90° bzw. 270° im Tabo-Schema) am meisten Material abgetragen.

Wird eine astigmatische rohrunde Brillenlinse, deren dünnste Randdicke oben und unten (90° bzw. 270° im Tabo-Schema) liegt und deren Randdicke temporal (0° bzw. 180°) am höchsten ist in eine Brillenfassung eingeschliffen, so resultiert, wenn im Vertikalschnitt die Mittendicke größer als die Randdicke ist eine Form-Brillenlinse, deren Randdicke über den gesamten Umfang groß ist. Eine solche Brillenlinse hat ein relativ hohes Gewicht und befriedigt ästhetisch nicht.

Man hat sich bisher so geholfen, daß bei Formlinsen der beschriebenen Art zur dringend erwünschten Gewichtsreduzierung beim Hersteller bzw. in der Rezeptwerkstatt die fertiggerandete Linse in ihrer Mittendicke so weit verringert wird, bis die Randdicke an mindestens einer Stelle einen Minimalwert von beispielsweise 0,5 mm erreicht. Dabei wird eine Linsenfläche also völlig neu hergestellt.

Es ist ohne weiteres einzusehen, daß dieses Verfahren ganz außerordentlich aufwendig ist, da praktisch jede der so gewichtsreduzierten Brillenlinsen einzeln bearbeitet werden muß.

Die hier angestellten Betrachtungen gelten sinngemäß für alle Brillenlinsen, die in mindestens einem Schnitt eine Mittendicke größer als die Randdicke und in unterschiedlichen Schnitten unterschiedliche optische Wirkungen haben. Dies sind neben den schon erwähnten astigmatischen Brillenlinsen auch solche die asphärische oder atorische Flächen oder Gleitsichtflächen haben.

Es ist die Aufgabe der vorliegenden Erfindung für Brillenlinsen der angegebenen Art eine solche Rohform zu schaffen, daß diese in ihrer endgültigen, zum Einsetzen in die Brillenfassung dienenden Form ein möglichst geringes Gewicht haben ohne eine Einzel-Nachbearbeitung zu erfordern und ohne in ihrer Herstellung hohe Kosten zu verursachen.

Diese Aufgabe wird gemäß der Erfindung durch die im Kennzeichen des Anspruchs 1 aufgeführten Merkmale gelöst.

Die ellipsenähnlichen Randkurventypen der Rohformen ergeben sich durch Berechnung von Brillenlinsen mit konstanter Randdicke. In jedem der ausgewählten Bereiche gibt es solche Brillenlinsen, während die sonstigen im jeweiligen Bereich verwendeten zentrisch ähnlichen Randkurven zu Rohformen führen, deren Randdicke in den angegebenen Grenzen, d.h. also nur sehr wenig schwankt.

Die nach den Merkmalen des Anspruchs 1 gestalteten Rohformen stellen einen optimalen Kompromiß zwischen der Forderung nach geringst möglichem Gewicht der fertigen Form-Brillenlinse und möglichst geringen Herstellkosten dar.

Der Optiker kann anhand von Tabellen und Unterlagen für eine Brillenlinse mit verordneten optischen Werten und die vom Kunden ausgewählte Brillenfassung den Typ der Randkurve und die Kurvenhöhe und -breite so bestimmen, daß die endgültig in die Fassung eingesetzte Brillenlinse eine möglichst geringe Mittendicke und damit ein möglichst geringes Gewicht aufweist.

Der Hersteller kann anhand der geschilderten Angaben des Optikers das angeforderte Brillenglas ab Lager liefern bzw. herstellen. Dabei ist durch die Beschränkung auf eine feste Anzahl von Randkurven die Lagerhaltung erleichtert bzw. die Herstellung vereinfacht. Es ist möglich mit einer einzigen Maschine alle vorkommenden Randkurventypen sowie alle zentrisch ähnlichen Randkurven herzustellen.

Es ist zweckmäßig die Randkurven als Ellipsen auszubilden, deren Exzentrizität zwischen den Werten 0,95 und 0,40 liegt.

Rohrunde Brillengläser sind vom Hersteller in gewissen, abgestuften Durchmesserbereichen lieferbar. Ein solcher Bereich wird beispielsweise durch rohrunde Brillenlinsen mit Durchmessern von 52,56,60,65,70,75 mm gebildet. Es ist nun möglich, daß die ellipsenförmigen Randkurven für die Rohlinsen in gewissen Teilen diese üblichen Durchmesser rohrunder Brillenlinsen überschreiten. In solchen Fällen ist die Randkurve in denjenigen Teilen in denen die üblichen Durchmesser überschritten werden als Kreisbogen ausgebildet.

Weitere zweckmäßige Ausgestaltungen der Rohform nach der Erfindung sind in den Unteransprüchen 4-6 beschrieben. Der Unteranspruch 7 beschreibt ein Mittel zur Auswahl der dem jeweiligen Problem optimal angepaßten Rohform.

Die Erfindung wird im folgenden anhand der Figuren 1-4 der beigefügten

Zeichnungen näher erläutert. Im einzelnen zeigen:

Fig. 1    eine Koordinatendarstellung der dioptrischen Daten einer Serie
         von astigmatischen Brillenlinsen, welche auch eine beispielsweise Einteilung in mehrere Bereiche zeigt;

Fig. 2a   die den Bereichen A,B,C der Fig. 1 zugeordneten Randkurven für
  - 2c    Brillenlinsen-Rohformen;

Fig. 3    ein erläuterndes Beispiel der Gestaltung einer Randkurve;

Fig. 4    ein Ausführungsbeispiel eines Mittels zur Auswahl der geeigneten Rohform einer astigmatischen Brillenlinse.

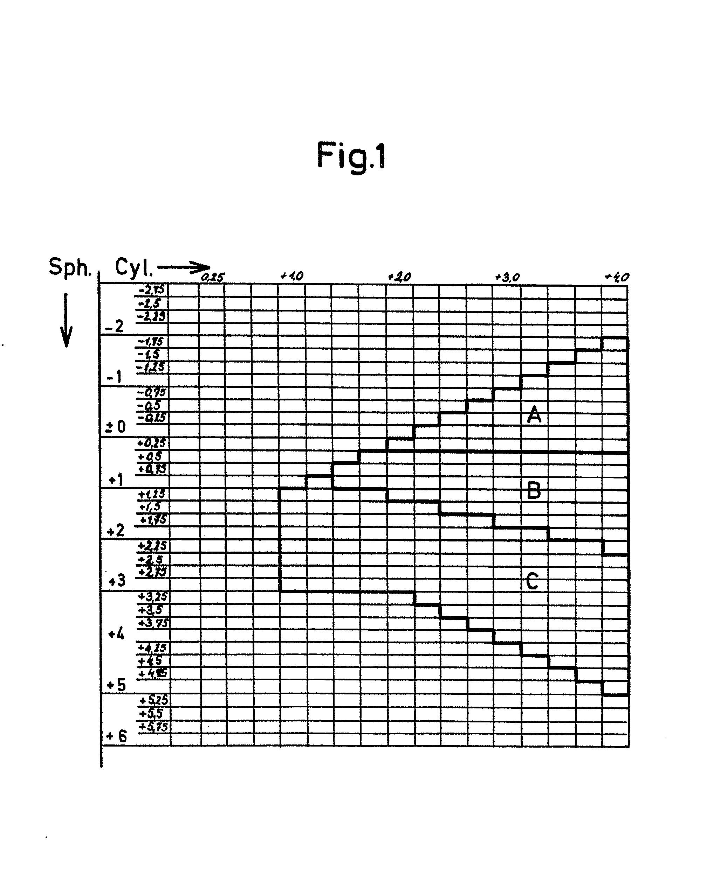

In Fig. 1 sind die dioptrischen Werte einer Serie von astigmatischen
Brillenlinsen dargestellt, welche die Werte sphärisch -3 bis +6 und
zylindrisch 0 bis +4 umfaßt. In dieser Darstellung sind mit A,B,C drei
Bereiche bezeichnet, in denen die Rohform der Brillenlinse abweichend
von der rohrunden Form so ausgebildet wird, daß eine optimale Gewichtsersparnis eintritt.

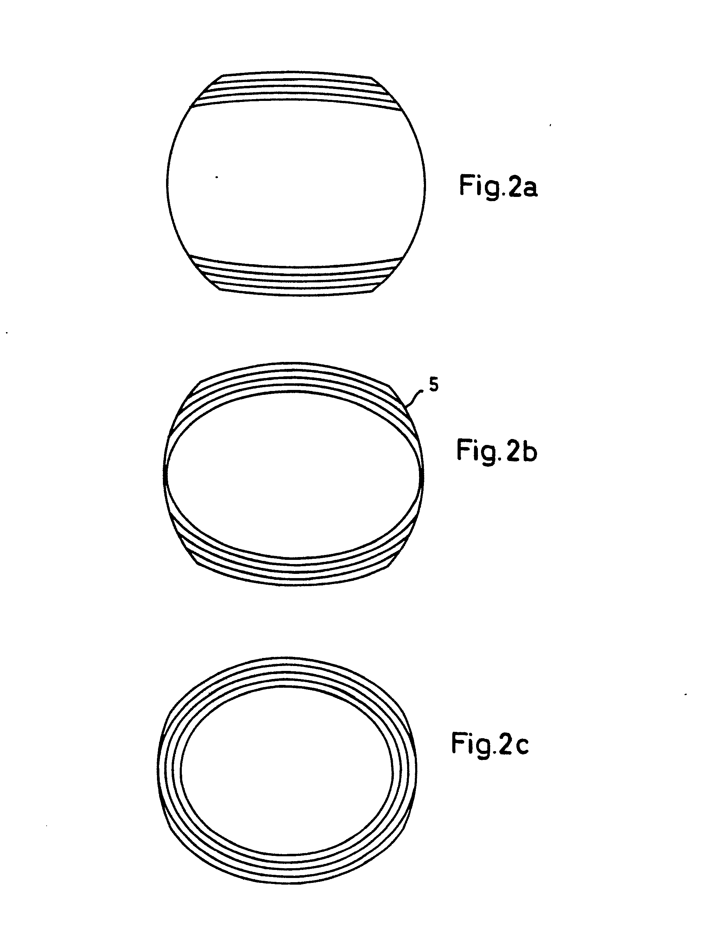

Jedem der Bereiche A,B,C in Fig. 1 ist ein ganz bestimmter Randkurventyp
zugeordnet, der auf mindestens Teilbereichen seines Umfangs ellipsenförmige Gestalt hat. In jedem Bereich sind mehrere, dem jeweiligen Randkurventyp zentrisch ähnliche Randkurven unterschiedlicher Höhe und Breite
vorgesehen. Dies ist aus den Figuren 2a, 2b und 2c ersichtlich, welche
die den Bereichen A,B,C zugeordneten Randkurven zeigen. Diese sind als
Ellipsen ausgebildet, deren Exzentrizität zwischen den Werten 0,95 und
0,4, vorzugsweise zwischen 0,9 und 0,5 liegt.

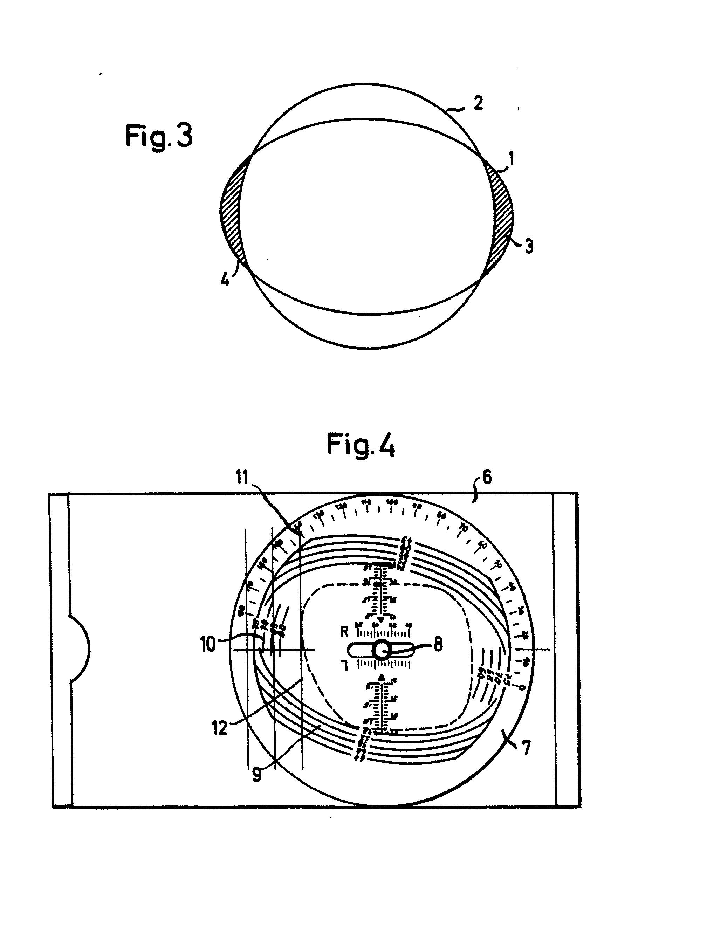

Fig. 3 zeigt eine Randkurve des in Fig. 2b dargestellten Typs, die hier
als Ellipse 1 bezeichnet ist. Mit 2 ist ein beispielsweise herausgegriffener maximaler Durchmesser einer rohrunden Brillenlinse bezeichnet. Da
die nach der Erfindung gestalteten Rohformen natürlich nicht größer sind
als der maximale Durchmesser eines rohrunden Brillenglases, fallen die
Bereiche 3 und 4 weg, d.h. im Endeffekt ist in denjenigen Teilen, in
denen die Ellipsenrandkurve 1 den üblichen maximalen Durchmesser 2 eines rohrunden Brillenglases überschreitet die Randkurve als Kreisbogen ausgebildet. Die so entstehende Randkurve ist in Fig. 2b mit 5 bezeichnet.

Die Randkurventypen für die einzelnen Bereiche sind so berechnet, daß
die im jeweiligen Bereich liegenden Brillenlinsen, welche die entsprechende Rohform erhalten über den ellipsenförmigen Umfangteil eine um
weniger als 1,5 mm schwankende Randdicke aufweisen. Anzustreben ist die
Schwankung der Randdicke unter einem Wert von 1 mm zu halten.

In der nachfolgenden Tabelle sind für drei beispielsweise herausgegriffene astigmatische Brillenlinsen die bei einer bestimmten ausgewählten
Brillenfassung sich ergebenden Randkurven durch die Angabe des großen
und kleinen Ellipsendurchmessers gekennzeichnet. Dabei ist angenommen,
daß die Achse des Hauptschnitts horizontal liegt. Man erkennt aus dieser
Tabelle, daß durch die Wahl der Rohform nach der Erfindung gegenüber der
rohrunden Form eine wesentliche Ersparnis an Mittendicke und Gewicht
erreicht wird. Die Gewichtsersparnis beträgt beim Beispiel 1 nahezu 50%
während sie bei den Beispielen 2 und 3 bei 30% liegt.

| Nr. | sph. dpt. | cyl. dpt. | Großer Ellipsendurch-messer (mm) | Kleiner Ellipsendurch-messer (mm) | Mittendicke (mm) | Gewicht (g) | Rohrunde Form Mittendicke (mm) | Gewicht (g) |
|---|---|---|---|---|---|---|---|---|
| 1 | +2,25 | 4,0 | 66 | 52 | 4,7 | 21,5 | 7,4 | 42,6 |
| 2 | +0,75 | 2,0 | 66 | 56 | 2,9 | 16,9 | 3,8 | 24,1 |
| 3 | +0,50 | 4,0 | 66 | 56 | 4,1 | 24,2 | 5,5 | 35,3 |

Im Falle des Beispiels 1 der Tabelle ist die Randdicke der Brillenglas-
Rohform auf dem elliptischen Teil ihres Umfanges konstant; beim Beispiel
Nr. 2 schwankt sie um 0,2 mm und beim Beispiel Nr. 3 um 0,7 mm.

Anhand der Fig. 4 soll nun erläutert werden wie die Auswahl der optimalen Rohform erfolgt.

Das Mittel zur Auswahl dieser Rohform besteht aus einer Unterlage 6 auf
welcher eine Scheibe 7 um den Punkt 8 drehbar angeordnet ist. Diese
Scheibe trägt auf ihrem oberen Umfangbereich ein Tabo-Schema von 0 bis

18?. Ferner sind auf dieser Scheibe elliptische Kurven 9 aufgezeichnet, welche der in Fig. 2b dargestellten Randkurven entsprechen. Zusätzlich sind in einem kleinen Bereich die Durchmesser rohrrunder Brillengläser angegeben.

Auf der Unterlage 6 befindet sich ein horizontaler Strich und drei vertikale Striche. Die vertikalen Striche dienen zur Auflage der Brillenfassung, wobei beispielsweise der Vertikalstrich 11 zur Anlage der Ausnehmung für die rechte Brillenlinse dient. Durch Verschieben der Unterlage 6 gegenüber der Scheibe 7 läßt sich die Pupillendistanz einstellen, die im dargestellten Beispiel den Wert 64 mm hat.

Hat die verordnete Brillenlinse beispielsweise einen Wert von sphärisch +2,5, zylindrisch +4,0, so ist sie anhand der Tabelle der Figur 1 im Bereich B zugeordnet. Zur Auswahl der richtigen Brillenglas-Rohform nimmt nun der Optiker das Hilfsmittel zur Hand, welches wie in Figur 4 dargestellt die Bezeichnung B trägt. Zunächst stellt er die Achslage des Astigmatismus auf den angegebenen Wert ein, welche im dargestellten Beispiel bei 15° liegt. Sodann wird der gemessene Wert der Pupillendistanz durch Verschieben der Unterlage 6 gegenüber der Scheibe 7 eingestellt.

Nach diesen Vorarbeiten wird die vom Kunden ausgewählte Brillenfassung auf die Scheibe 7 aufgelegt und zwar so, daß die rechte Brillenlinsenaufnahme 12 die in Figur 4 gestrichelt dargestellte Lage einnimmt.

Nunmehr kann der Optiker ohne weiteres ablesen, daß die optimale Rohform eine Ellipse des Typs B mit einer Ellipsenbreite von 60 mm und eine Ellipsenhöhe von 48 mm ist.

Diese Daten gibt der Optiker zusammen mit den dioptrischen Daten der Brillenlinse an den Hersteller durch und erhält von diesem eine Brillenlinse einer entsprechenden Rohform, deren Randdicke über ihren gesamten epelliptischen Verlauf um nicht mehr als 1,5 mm schwankt. Dadurch ist eine Optimierung der Mittendicken und des Gewichtes der in die Fassung eingeschliffenen Brillenlinse erreicht, d.h. der Benutzer der Brille genießt optimalen Tragekomfort.

Die Auswahl der optimalen Rohform der Brillenlinse wurde zur Erläuterung im Zusammenhang mit den Zeichnungen am Beispiel eines astigmatischen Brillenglases erläutert. Die Auswahl der optimalen Rohform erfolgt in derselben Weise auch für Brillenlinsen die eine asphärische oder atorische Fläche haben oder auch für Brillenlinsen mit einer Gleitsichtfläche. Es hat sich dabei gezeigt daß beispielsweise für Brillenlinsen mit einer Gleitsichtfläche dieselben Randkurvenformen verwendet werden können, wie sie für astigmatische Brillengläser Verwendung finden.

Patentansprüche:

1. Rohform für Brillenlinsen, die in mindestens einem Schnitt eine Mittendicke größer als die Randdicke und in unterschiedlichen Schnitten unterschiedliche optische Wirkungen haben, dadurch gekennzeichnet, daß im gesamten von einer Serie dieser Brillenlinsen erfaßten dioptrischen Feld eine feste Anzahl von Bereichen (A,B,C...) definiert und jedem Bereich ein auf mindestens Teilbereichen des Umfanges ellipsenähnlicher Randkurventyp so zugeordnet ist, daß die Randdicke der im jeweiligen Bereich liegenden Brillenlinsen über den ellipsenförmigen Umfangteil um weniger als 1,5 mm schwankt.

2. Rohform für Brillenlinsen nach Anspruch 1, dadurch gekennzeichnet, daß die Randkurven Ellipsen sind, deren Exzentrizität zwischen den Werten 0,95 und 0,40 liegt.

3. Rohform für Brillenlinsen nach Anspruch 2, dadurch gekennzeichnet, daß in denjenigen Teilen, in denen die Ellipsen-Randkurven die üblichen Durchmesser rohrunder Brillenlinsen überschreiten die Randkurve als Kreisbogen ausgebildet ist.

4. Rohform für Brillenlinsen nach Anspruch 1-3, dadurch gekennzeichnet, daß in jedem Bereich mehrere dem jeweiligen Randkurventyp zentrisch ähnliche Randkurven unterschiedlicher Höhe und Breite vorgesehen sind.

5. Rohform für Brillenlinsen nach Anspruch 1, dadurch gekennzeichnet, daß mindestens drei Bereiche (A,B,C) definiert sind.

6. Rohform für Brillenlinsen nach Anspruch 1-5, dadurch gekennzeichnet, daß die Randdicke der im jeweiligen Bereich liegenden Brillenlinsen über den ellipsenförmigen Umfangteil um weniger als 1 mm schwankt.

7. Mittel zur Auswahl der Rohform einer Brillenlinse minimalen Gewichtes aus einer Serie von Brillenlinsen, die in mindestens einem Schnitt eine Mittendicke größer als die Randdicke und in unterschiedlichen Schnitten unterschiedliche optische Wirkungen haben, gekennzeichnet durch eine Tabelle, die den optischen Bereich der Serie in eine feste Anzahl von Bereichen (A,B,C) unterteilt, denen jeweils ein Randkurventyp zugeordnet ist, sowie durch eine, der Bereichsanzahl entsprechende Anzahl von Unterlagen (6) die jeweils auf einer entsprechend der Achslage des Schnittes größter optischer Wirkung der Brillenlinse drehbaren Scheibe (7) eine Schar von Randkurven zeigen, die dem zugeordneten Randkurventyp zentrisch ähnlich sind, und die ferner Bezugslinien (11) zur Auflage der Brillenfassung (12) aufweist.

# Fig.1

Fig.2a

Fig.2b

Fig.2c

Fig.3

Fig.4